# EUROPEAN PATENT APPLICATION

(11) **EP 1 733 699 A1**
(43) Veröffentlichungstag der Anmeldung: **20.12.2006**
(21) Anmeldenummer: 05731698.6
(22) Anmeldetag: 11.03.2005
(51) Int. Cl.: A61C 17/22, A46B 9/04

(54) **REINIGUNGSKOPF FÜR EINE ELEKTROMECHANISCHE ZAHNBÜRSTE**

(30) Priorität: 18.03.2004 RU 2004108016
(71) Anmelder: Kuznetsov, Valeriy Vladimirovich, Tomsk, 634034 (RU); GONETS, Valeriy Nikolaevich, Tomskaya obl. 634057 (RU)
(72) Erfinder: Kuznetsov, Valeriy Vladimirovich, Tomsk, 634034 (RU); GONETS, Valeriy Nikolaevich, Tomskaya obl. 634057 (RU)
(74) Vertreter: Jeck, Anton
(86) Internationale Anmeldenummer: PCT/RU2005/000111
(87) Internationale Veröffentlichungsnummer: WO 2005/087134

(57) **Zusammenfassung**

Die Erfindung betrifft einen Zahnbürstenkopf einer elektromechanischen Zahnbürste. Dieser besteht aus einem tragenden Stiel und einer an seinem Ende befestigten, auf der Innenseite beborsteten U-förmigen Platte. Der Bürstenkopf verfügt über eine weitere U-förmige Platte, die der ersten ähnlich und bezüglich dieser spiegelbildlich angeordnet ist. Die U-förmigen Platten sind mittels einer Achse verbunden, die durch eine Profilausnehmung am verflachten Ende des tragenden Stiels senkrecht zu dessen Längsachse hindurchgehen.

## Beschreibung

Die Erfindung betrifft Zahnbürsten mit einem elektromechanischen Antrieb.

Aus dem US-Patent 5 305 491, IPC A46B13/02, Priorität vom 07.05.2002, und aus dem US-Patent 6 401 288, IPC A46B13/02, Priorität vom 11.06.2002, sind Zahnbürstenköpfe einer elektromechanischen Zahnbürste bekannt. Beide Zahnbürstenköpfe weisen einen Stiel auf, dessen Ende aufgespaltet ist. Am Ende jedes Abschnitts des aufgespalteten, tragenden Stiels ist je eine Zahnbürste starr befestigt. Beide Zahnbürsten sind an den Enden des aufgespalteten Stiels so angeordnet, dass ihre Borsten gegeneinander und unter einem Winkel von 70-80° zueinander ausgerichtet sind.

Der Nachteil dieser Zahnbürstenköpfe besteht in der nicht ausreichenden Reinigungsmöglichkeit, da der Benutzer die Zahnbürste im Mundraum nach Gefühl optimal nicht ausrichten kann, so dass die Borstenputzfläche mit dem Zahnverlauf maximal zusammenfällt. Dies ist auf die Unmöglichkeit der Zahnbürsten zurückzuführen, sich in der Ebene zu drehen, die die Achse des tragenden Stiels schneidet, auf dem sie befestigt sind. Infolgedessen ermöglichen die Zahnbürsten, die nach dem Zahnverlauf nicht optimal ausgerichtet sind, keine ausreichende Reinigung der Zähne. Dies verursacht auch ein Missgefühl beim Versetzen der Zahnbürste die Zahnreihe entlang.

Die nach der technischen Lösung am nächsten kommende Erfindung ist der Zahnbürstenkopf SG-8001 der elektromechanischen Zahnbürste Typ CD bzw. GD, die von der Fa. Ninghai Maidigg Model and Plastics Co. Ltd. (China, http://www.maidigg.com) hergestellt wird. Dieser Zahnbürstenkopf wird nach dem US-Patent 5 171 066, veröffentlicht am 15.12.1992, ausgeführt. Der Zahnbürstenkopf umfasst einen tragenden Stiel, dessen Ende aufgespaltet ist. Am Ende des aufgespalteten Stiels ist eine U-förmige Platte starr befestigt, auf deren Innenseite Borsten angeordnet sind. Die Abmessungen des Zahnbürstenkopfs sind so, dass er frei in den Mundraum hineinpasst und auf eine Zahnreihe aufgesetzt wird, wobei er die Oberfläche von zwei bis drei Zähnen dicht umfasst.

Der Nachteil des bekannten Zahnbürstenkopfs ist, dass kein ausreichendes Zähneputzen möglich ist, da der Benutzer die Zahnbürste im Mundraum nach Gefühl optimal nicht ausrichten kann, so dass die Borstenputzfläche mit der Richtung der Zahnoberfläche maximal zusammenfällt. Dies rührt von der starren Befestigung der U-förmigen Platte am Ende des tragenden Stiels her. Folglich kann sich der Zahnbürstenkopf in der Ebene nicht drehen, die die Achse des tragenden Stiels schneidet, an dem er befestigt ist. Dies verursacht eine unbequeme Verwendung der Zahnbürste, wenn diese die Zahnreihe entlang versetzt wird, fordert besondere Fähigkeiten vom Benutzer und verursacht eine erhöhte Zahnfleischtraumatisierung beim Zähneputzen infolge der Schrägstellung der Längsachse des Zahnbürstenkopfes bezüglich der Zahnreihe sowie das Entstehen eines zu hohen Borstendrucks auf einige Zonen des Zahnfleisches.

### Zusammenfassung der Erfindung

Die Hauptaufgabe der Erfindung besteht in der Entwicklung eines Zahnbürstenkopfs einer elektromechanischen Zahnbürste, der eine bessere Wirksamkeit der Reinigung aufgrund des freiem Drehens der U-förmigen Borstenplatten in derjenigen Ebene gewährleistet, die parallel zum tragenden Stiel liegt. Ferner soll der Zahnbürstenkopf die Leistung beim Zähneputzen erhöhen.

Diese Aufgabe wird dadurch gelöst, dass der Zahnbürstenkopf der elektromechanischen Zahnbürste, der aus einem tragenden Stiel und einer U-förmigen Platte besteht, die auf ihrer Innenfläche Borsten trägt und die am Stielende befestigt wird, eine weitere, U-förmige, analoge Platte umfasst, die zur ersten Platte spiegelbildlich angeordnet ist, wobei die U-förmigen Platten mit einer Achse verbunden sind, die durch eine Profilausnehmung am verflachten Ende des tragenden Stiels senkrecht zu dessen Achse hindurchgeht.

Es ist zweckmäßig, die Borsten an auswechselbaren Borstenträgern anzuordnen, die auf der Innenoberfläche der beiden U-förmigen Platten befestigt sind.

Zur Befestigung der auswechselbaren Borstenträger an den U-förmigen Platten können Achsbolzen auf den äußeren Oberflächen der Borstenträger vorgesehen werden, die in für diesen Zweck vorgesehene Befestigungsausnehmungen der U-förmigen Platten eingesteckt werden.

Zweckmäßig ist die Ausführung der Profilausnehmung am verflachten Stielende in Form eines Schlüssellochs mit einem offenen, äußeren Ende. Durch das offene Außenende der Profilausnehmung wird die Achse eingesteckt, die die U-förmigen Platten verbindet.

Während der Reinigung passen sich die frei drehenden, U-förmigen Platten mit den auswechselbaren Borstenträgern in der parallel zum tragenden Stiel liegenden Ebene aufgrund der sie verbindenden Achse, die durch die Profilausnehmung am verflachten Stielende hindurchgeht, an den Verlauf der Zähne an. Somit verfolgen die U-förmigen Platten den Zahnverlauf von selbst und stellen eine richtigere und wirksame Reinigung der Zähne sicher.

Die Erhöhung der Leistung des Reinigungsverfahrens wird durch gleichzeitiges Putzen der oberen und unteren Zähne gewährleistet.

Die Profilausnehmung in Form eines Schlüssellochs mit dem offenen Außenende am verflachten Stielende ermöglicht einen leichten Zusammenbau des Zahnbürstenkopfs und ein leichtes Auswechseln der U-förmigen Platten.

### Kurzbeschreibung der Zeichnungen

Die Erfindung wird nun anhand eines Ausführungsbeispiels näher erläutert. Es zeigen:
- Fig. 1: eine Explosionsansicht eines Zahnbürstenkopfs gemäß der Erfindung einer elektromechanischen Zahnbürste und
- Fig.2: eine perspektivische Ansicht des Zahnbürstenkopfs der Fig. 1 im montierten Zustand.

### Beschreibung des Ausführungsbeispiels

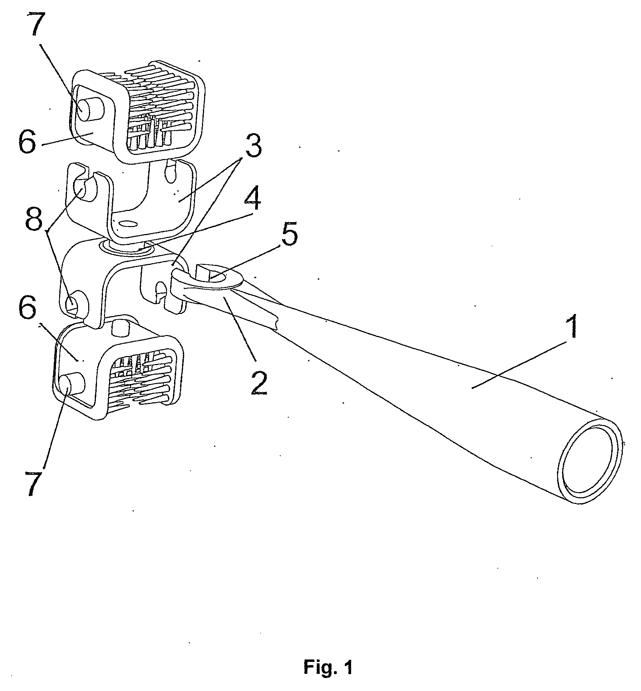

Der Zahnbürstenkopf einer elektromechanischen Zahnbürste (Fig. 1) besteht aus einem tragenden Stiel 1 mit einem verflachten Ende 2 und zwei U-förmigen Platten 3, die durch eine Achse 4 verbunden sind, die in eine Profilausnehmung 5 am verflachten Ende 2 des tragenden Stiels 1 eingesteckt wird. Auf der Innenoberfläche der U-förmigen Platten 3 sind auswechselbare Borstenträger 6 angeordnet, für deren Befestigung auf ihren Außenoberflächen Achsbolzen 7 vorgesehen sind, die in Öffnungen 8 von seitlichen Abschnitten der U-förmigen Platten 3 eingesteckt werden.

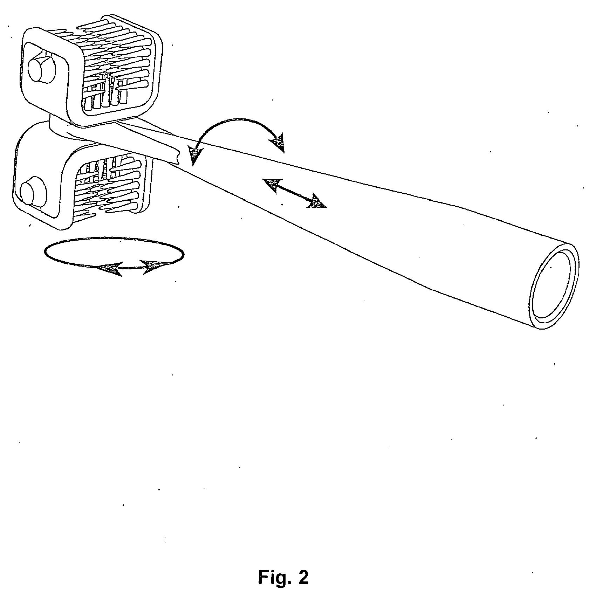

In Fig. 2 zeigen die Pfeile die mögliche Richtung des Zahnbürstenkopfs während Putzens an.

Der Zahnbürstenkopf der elektromechanischen Zahnbürste arbeitet folgendermaßen.

Der Zahnbürstenkopf wird mit dem Handteil der Zahnbürste verbunden und in den Mundraum so eingeführt, dass die Kronen der gegenüberliegenden oberen und unteren Zähne gleichzeitig zwischen den Borsten liegen. Der elektrische Antrieb wird eingeschaltet. Während der Reinigung kann der Zahnbürstenkopf abhängig vom Typ des elektrischen Antriebs eine der in Fig. 2 gezeigten Bewegungen ausführen, und zwar querlaufend, pendelnd, hin- und hergehend, pickend oder alle Bewegungen gleichzeitig. Diese Bewegungen werden auf die Borsten übertragen, die die Kronenoberfläche putzen, wobei sie den Zahnbelag entfernen. Zum Putzen der Zahnzwischenräume sind querlaufende und pendelnde Bewegungen am geeignetsten. Beim allmählichen Versetzen des Zahnbürstenkopfs den Zähnen entlang, richten sich die beiden U-förmigen Platten 3 mit den auswechselbaren Borstenträgern 6 nach dem Verlauf der Zähne aus; dies wird durch freies Drehen der Achse 4 in der Profilausnehmung 5 gewährleistet.

Somit verfolgen die U-förmigen Platten 3, die miteinander durch die Achse 4 starr verbunden sind, den Verlauf der Zähne, und der Benutzer braucht das bewusst nicht zu machen. Dies sichert nicht nur eine höhere Qualität der Reinigung, sondern auch eine einfache Verwendung und einen Komfort sowie keine Verletzung des Zahnfleisches.

Grundsätzlich wichtig ist, dass der Zahnbürstenkopf aufgrund der Ausführung eine richtige Reinigung der Zähne ohne spezielle Fähigkeiten des Benutzers automatisch gewährleistet.

Prüfungen des Zahnbürstenkopfs der elektromechanischen Zahnbürste wurden mit zehn Freiwilligen durchgeführt, wovon acht eine höhere Anfälligkeit von Zahnfleischbluten hatten. Alle benutzten den Zahnbürstenkopf in der vorgeschlagenen Ausführung täglich morgens und abends zwei bis drei Minuten lang im Laufe von einem Monat.

Die Prüfungen zeigten, dass die Einfachheit und Milde der Reinigung den Benutzern gefiel und dass die Bürste kein Zahnfleischbluten verursachte. Alle betonten die hohe Reinigungsqualität der Zahnzwischenräume und das angenehme Massagegefühl am Zahnfleisch.

Somit sichert die vorgeschlagene Konfiguration des Zahnbürstenkopfs der elektromechanischen Zahnbürste eine gründliche Reinigung aufgrund des freien Drehens der U-förmigen, beborsteten Platten in der parallel zum tragenden Stiel liegenden Ebene.

Die gleichzeitige Reinigung der oberen und unteren Zähne stellt eine hohe Leistung des ganzen Reinigungsverfahrens sicher.

## Patentansprüche

1. Zahnbürstenkopf einer elektromechanischen Zahnbürste, der aus einem tragenden Stiel (1) und einer an seinem Ende befestigten, auf der Innenseite beborsteten, U-förmigen Platte besteht,
**dadurch gekennzeichnet,**
**dass** der Bürstenkopf über eine weitere U-förmige Platte (3) verfügt, die der ersten (3) ähnlich und bezüglich dieser spiegelbildlich angeordnet ist, wobei die U-förmigen Platten (3, 3) mittels einer Achse (4) verbunden sind, die durch eine Profilausnehmung (5) am verflachten Ende des tragenden Stiels (1) senkrecht zu dessen Längsachse hindurchgeht.

2. Zahnbürstenkopf nach Anspruch 1,
**dadurch gekennzeichnet,**
**dass** die Borsten auf auswechselbaren Trägern (6, 6) angeordnet sind, die auf der Innenseite der beiden U-förmigen Platten (3, 3) befestigt sind.

3. Zahnbürstenkopf nach Anspruch 1,
**dadurch gekennzeichnet,**
**dass** in seitlichen Abschnitten der auswechselbaren Borstenträger (6) Achsbolzen (7) vorgesehen sind.

4. Zahnbürstenkopf nach Anspruch 1,
**dadurch gekennzeichnet,**
**dass** in seitlichen Abschnitten der auswechselbaren Borstenträger Befestigungsöffnungen vorgesehen sind.

5. Zahnbürstenkopf nach Anspruch 1,
**dadurch gekennzeichnet,**
**dass** die Profilausnehmung (5) am verflachten Ende des tragenden Stiels (1) in Form eines Schlüssellochs mit einem offenen Außenende ausgeführt ist.
